# EUROPEAN PATENT APPLICATION

(11) **EP 2 907 698 A1**
(43) Date of publication of application: **19.08.2015**
(21) Application number: 13844855.0
(22) Date of filing: 07.10.2013
(51) Int. Cl.: B60Q 1/44

(54) **BRAKE LAMP CONTROL DEVICE**

(30) Priority: 10.10.2012 JP 2012224972
(71) Applicant: Mitsubishi Jidosha Kogyo Kabushiki Kaisha, Tokyo 108-8410 (JP)
(72) Inventor: SASAKI Takanori, Tokyo 108-8410 (JP)
(74) Representative: Vossius & Partner Patentanwälte Rechtsanwälte mbB
(86) International application number: PCT/JP2013/077257
(87) International publication number: WO 2014/057911

(57) **Abstract**

A brake lamp control device calculates a control torque value to be produced by a motor based on vehicle running status information and manipulation status information. The brake lamp control device turns on brake lamps if the control torque value is on the regeneration side of and larger than a predetermined reference regenerative torque value. For example, the reference regenerative torque value is set approximately equal to a deceleration-side torque value of engine braking that would be obtained by cancellation of an accelerator manipulation.

## Description

### TECHNICAL FIELD

The present invention relates to a brake lamp control device for controlling brake lamps which serve to notify nearby persons of deceleration of a vehicle.

### BACKGROUND ART

Conventionally, when a vehicle is decelerated by a manipulation of a brake pedal, brake lamps that are provided on a rear surface etc. of the vehicle are turned on to notify nearby vehicles, pedestrians, etc. of the deceleration. Deceleration of a vehicle occurs not only during a manipulation of the brake pedal but also during engine braking, regenerative braking, or the like that occurs when, for example, the driver has stepped off the accelerator pedal.

Among techniques for notifying nearby persons of deceleration that is caused by an event other than a manipulation of the brake pedal is one disclosed in the following Patent document 1 in which a reference deceleration rate is set so as to vary depending on the vehicle speed and the brake lamps are turned on upon occurrence of a vehicle deceleration rate that exceeds the reference deceleration rate.

### PRIOR ART DOCUMENT

### PATENT DOCUMENT

Patent document 1: JP-A-4-358935

### SUMMARY OF THE INVENTION

### PROBLEMS THAT THE INVENTION TO SOLVE

The technique disclosed in Patent document 1 has a problem that since an actual vehicle speed (deceleration rate) is compared with a reference deceleration rate, the brake lamps can be turned on only after occurrence of a deceleration rate that is higher than a prescribed rate irrespective of a running road surface situation (e.g., a downhill road). Where a vehicle to be controlled is an electric vehicle which can be accelerated and decelerated by controlling the output torque of a motor, strong deceleration-side torque can be used more easily than in gasoline vehicles. Therefore, when it is expected that an intense deceleration operation will be caused by an event other than a manipulation of the brake pedal, it is desirable to notify nearby persons of the deceleration as early as possible.

Furthermore, where the brake lamps are controlled on the basis of a deceleration rate as in the above-described Patent document 1, the brake lamps are turned on after actual decrease of the vehicle speed, which results in a problem that the drivers of nearby vehicles would feel uncomfortable.

Still further, in the case of gasoline vehicles which are driven by an engine, nearby vehicles can be notified of deceleration by a sound that is associated with engine braking. In contrast, in the case of electric vehicles which do not generate such a sound, a problem arises that the drivers of nearby vehicles unlikely realize the deceleration.

The present invention has been made in view of the above-described problems in the prior art, and an object of the present invention is therefore to notify nearby persons properly of a deceleration operation that is caused by an event other than a manipulation of a brake pedal.

### MEANS FOR SOLVING THE PROBLEMS

To solve the above-described problems and attain the obj ect, the present invention provides a brake lamp control device for controlling turn-on/off of a brake lamp of a vehicle in which braking power is obtained by increase of regenerative torque produced by a motor, characterized by comprising: running status information acquiring means which acquires running status information of the vehicle; manipulation status information acquiring means which acquires manipulation status information of the vehicle; regenerative torque calculating means which calculates a regenerative torque value of the motor based on the running status information and the manipulation status information; and regeneration lamp control means which turns on the brake lamp if the regenerative torque value calculated by the regenerative torque calculating means is on the regeneration side of and larger than the a predetermined reference regenerative torque value.

In this configuration, a turn-on control is performed on the brake lamp if a regenerative torque value for the motor is on the regeneration side of and larger than the predetermined reference regenerative torque value. With this measure, the brake lamp can be turned on quickly even in the case where deceleration due to occurrence of regenerative torque is expected but an actual deceleration rate is low, whereby the deceleration can be announced with proper timing by means of the brake lamp, that is, nearby vehicles can be notified of the fact that the self vehicle is decelerating.

The running status information acquiring means may comprise a vehicle speed sensor which detects a vehicle speed of the vehicle, and the reference regenerative torque value may be varied based on the vehicle speed.

According to this configuration, since the regenerative torque value can be varied based on the vehicle speed, it can be changed properly in accordance with the running status of the vehicle.

The manipulation status information acquiring means may comprise a pedal sensor which detects a status of an accelerator pedal or a brake pedal of the vehicle, and the regenerative torque calculating means may calculate the regenerative torque from the vehicle speed and the status of the accelerator pedal or the brake pedal.

According to this configuration, since a regenerative torque value is calculated from a vehicle speed and a status of the accelerator pedal or the brake pedal, a regenerative torque value can be calculated correctly on the basis of a vehicle running status and manipulation status.

The vehicle may further comprise downhill road judging means which judges whether or not a road on which the vehicle runs is a downhill road. If it is judged that the road on which the vehicle runs is the downhill road, the regeneration lamp control means may turn off the brake lamp even if the calculated regenerative torque value is on the regeneration side of and larger than the reference regenerative torque value.

In this configuration, in the case where the road on which the vehicle is running is a downhill road, the brake lamp is turned off or kept off even if a calculated regenerative torque value is larger than the reference regenerative torque value. This makes it possible to turn off the brake lamp in the case where the necessity of announcement using the brake lamp is low as exemplified by a case of running on a long downhill road in which a deceleration state continues or deceleration does not occur though regenerative torque is being produced.

The reference regenerative torque value may be a preset regenerative torque value that is obtained by cancellation of an accelerator manipulation on the vehicle.

In this configuration, the reference regenerative torque value is set approximately equal to a regenerative torque value corresponding to what is called engine braking. As a result, the brake lamp can be turned on in the case where deceleration that is higher than would occur during engine braking may occur and hence it is necessary to notify nearby vehicles etc. of the deceleration.

The vehicle is of such a type that selection can be made between multiple regeneration modes. And the regenerative torque calculating means may calculate the regenerative torque value of the motor based on a vehicle speed of the vehicle and a selected regeneration mode.

### ADVANTAGES OF THE INVENTION

The invention makes it possible to notify nearby persons properly of a deceleration operation that is caused by an event other than a manipulation of a brake pedal.

### BRIEF DESCRIPTION OF THE DRAWINGS

[Fig. 1] Fig. 1 is a block diagram showing the configuration of a brake lamp control device 10 according to an embodiment.
[Fig. 2] Fig. 2 is an explanatory graph for description of a lamp lighting control that is performed by a regeneration lamp control means 108.
[Fig. 3] Fig. 3 is a flowchart of a process that is executed by the brake lamp control device 10.

### MODES FOR CARRYING OUT THE INVENTION

A brake lamp control device according to a preferred embodiment of the present invention will be described below in detail with reference to the accompanying drawings.

### (Embodiment)

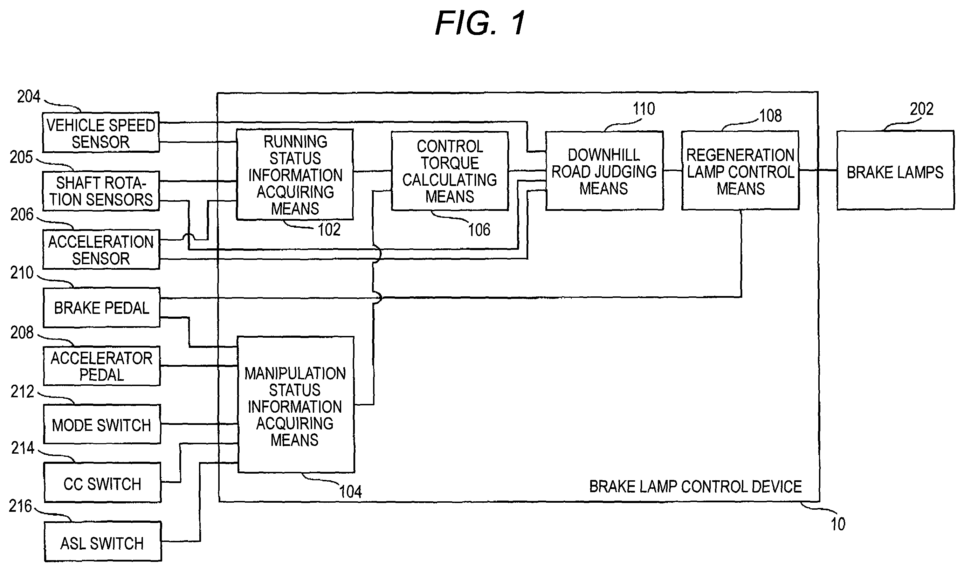

Fig. 1 is a block diagram showing the configuration of a brake lamp control device 10 according to the embodiment. The brake lamp control device 10 according to the embodiment is a device for controlling the turning-on/off of brake lamps 202 of a vehicle in which strong braking power is obtained by increase of regenerative torque that is produced by amotor. The embodiment is directed to an electric vehicle that runs on drive torque produced by a motor (an example vehicle incorporating the brake lamp control device 10).

The brake lamp control device 10 is implemented in such a manner that an ECU (not shown) runs a control program using a CPU, the ECU being configured so as to include, for example, the CPU, a ROM which is stored with the control program etc., a RAM which serves as a working area of the control program, an EEPROM which holds various kinds of data in a rewritable manner, an interface unit for interfacing with peripheral circuits etc., and other units.

The brake lamp control device 10 is composed of a running status information acquiring means 102, a manipulation status information acquiring means 104, a control torque calculating means 106 (which corresponds to the term "regenerative torque calculatingmeans" used in the claims), a regeneration lamp control means 108, and a downhill road judging means 110.

The running status information acquiring means 102 acquires running status information of the vehicle. Examples of running status information are vehicle speed information and acceleration information. The running status information acquiring means 102 acquires speed information and acceleration information from, for example, a vehicle speed sensor 204 and an acceleration sensor 206 which are provided in the vehicle. The running status information acquiring means 102 acquires crank shaft rotation speed information and propeller shaft rotation speed information from shaft rotation sensors 205. The running status information acquiring means 102 may also acquire, as running status information, vehicle current position information, current position inclination information, or the like.

The manipulation status information acquiring means 104 acquires manipulation status information of the vehicle. Examples of manipulation status information are such kinds of information as step-on amounts of the accelerator pedal and the brake pedal of the vehicle, a setting status of a running mode such as an economical mode or a sport mode, a setting status of a cruise control function, and a setting status of an ASL (auto speed limiter) function. The manipulation status information acquiring means 104 acquires above kinds of information from such things provided in the vehicle as the accelerator pedal (more specifically, an accelerator pedal sensor) 208, the brake pedal (more specifically, a brake pedal sensor) 210, a mode switch 212 for switching between the runningmodes, a CC switch 214 for setting the cruise control function, and an ASL switch 216 for setting the ASL function.

The control torque calculating means 106 calculates a regenerative torque value for the motor on the basis of the running status information acquired by the running status information acquiring means 102 and the manipulation status information acquired by the manipulation status information acquiring means 104. First, the control torque calculating means 106 acquires a request torque value that is requested by a drive manipulation (stepping on the accelerator pedal or the brake pedal) of the driver, the cruise control function (more specifically, a cruise control system that realizes the cruise control function), the ASL function (more specifically, an ASL system that realizes the ASL function), etc. Then the control torque calculating means 106 calculates a control torque value (regenerative torque value) to be used for an actual drive power control on the motor on the basis of the request torque value. More specifically, when the driver has made a regeneration request (braking request), the request torque value changes instantaneously from 0 to -100. However, if such a request torque value is realized by the motor, the vehicle brakes quickly to cause a heavy load on the drive system of the vehicle and deteriorate the comfortableness of a ride of the driver and passengers. In view of this, the control torque calculating means 106 changes the control torque value stepwise from 0 to -100 in accordance with the power producing ability of the motor, which allows the motor to operate smoothly. For another example, when the driver has stepped on the accelerator pedal fully and rapidly, the request torque value changes instantaneously from 0 to 100. In response to such a request torque value change, the control torque calculating means 106 changes the control torque value stepwise from 0 to 100 in accordance with the power producing ability of the motor.

The regeneration lamp control means 108 turns on the brake lamps 202 if the regenerative torque value calculated by the control torque calculatingmeans 106 is larger than a predetermined reference regenerative torque value. For example, the reference regenerative torque value is set equal to a regenerative torque value that would be obtained during engine braking. There are two kinds of regenerative torque: regenerative torque corresponding to engine braking and regenerative torque that is produced according to a brake manipulation amount. Regenerative torque corresponding to engine braking is produced in the following manner. When the driver cancels an accelerator manipulation, the information to that effect is sent to the control torque calculating means 106 via the manipulation status information acquiring means 104 and the control torque calculating means 106 controls the motor so that it functions as a generator. An electric power generation load of the motor that is functioning as a generator acts on the drive wheels, whereby regenerative torque corresponding to engine braking is produced. Regenerative torque that is produced according to a brake manipulation amount is produced in the following manner. When the driver makes a brake manipulation (e.g., stepping on the brake pedal), regenerative torque corresponding to the brake manipulation amount is produced so as to be added to the above-described regenerative torque corresponding to engine braking.

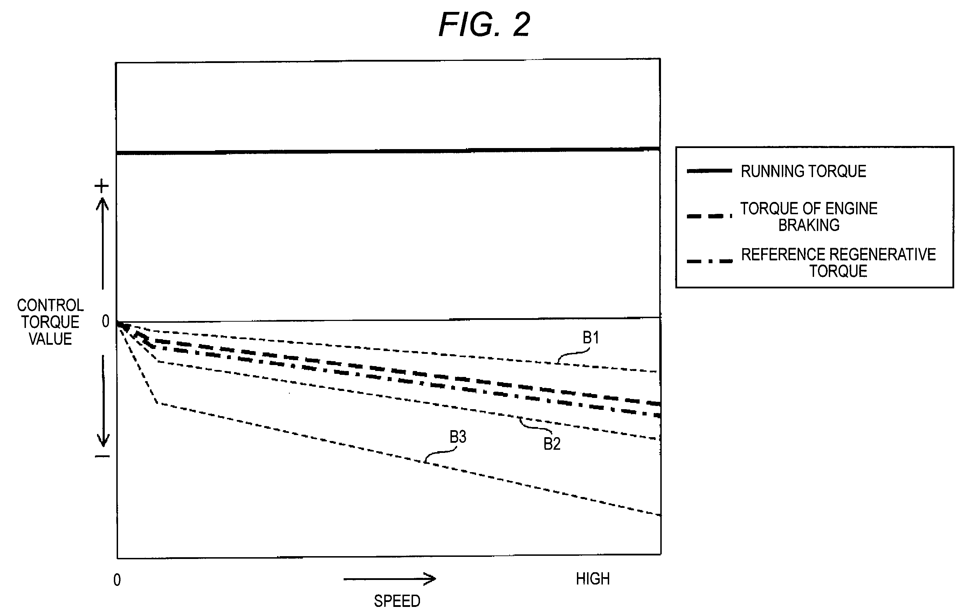

Fig. 2 is an explanatory graph for description of a lamp lighting control that is performed by the regeneration lamp control means 108. In the graph of Fig. 2, the vertical axis represents the control torque value for the motor and the horizontal axis represents the vehicle speed. A positive control torque value on the vertical axis means torque in the motor driving direction: the vehicle is accelerated or runs at a constant speed if it is running on a flat road. On the other hand, a negative control torque value on the vertical axis means regenerative torque: the vehicle is decelerated if it is running on a flat road.

The thick solid line in Fig. 2 represents torque that is produced when the vehicle runs with the accelerator pedal stepped on fully and has a constant value over the entire speed range. The thick broken line in Fig. 2 represents torque equivalent to engine braking which is negative over the entire speed range and whose absolute value increases in proportion to the speed.

The thick chain line in Fig. 2 represents a reference regenerative torque value curve which is approximately the same as the curve of the torque equivalent to engine braking. The regeneration lamp control means 108 performs a turn-on control on the brake lamps 202 if the control torque value is on the regeneration side (negative side) of and larger than the reference regenerative torque value. This is because it is desirable to notify vehicles etc. around the self vehicle in a high-level regenerative operation state which is equivalent to a retarder-active operation state.

Where the vehicle is of such a type that selection between multiple regenerationmodes canbemadebya shiftingmanipulation, a control torque value is determined from a speed and a regeneration mode that is selected currently. Symbols B1-B3 shown in Fig. 2 represent example curves of multiple regeneration modes. If curve B1 is selected, a relatively small regenerative torque value is produced for the same speed. If curve B3 is selected, a relatively large regenerative torque value is produced for the same speed.

Returning to Fig. 1, the downhill road judging means 110 judges whether or not the road on which the vehicle is running is a downhill road. For example, the downhill road judging means 110 judges whether or not the vehicle is running on a downhill road on the basis of a control torque value calculated by the control torque calculating means 106, a vehicle speed acquired from the vehicle speed sensor 204, a vehicle acceleration rate acquired from the acceleration sensor 206, and rotation speeds of the respective shafts acquired from the shaft rotation sensors 205. More specifically, the downhill road judging means 110 judges whether or not a state that the regenerative torque value is kept constant and the deceleration rate is within a prescribed range has lasted for a prescribed time. If the deceleration rate is lower than a prescribed value during occurrence of regenerative torque, it means that almost no deceleration has been made by the regenerative torque. For example, such a situation occurs when the vehicle is running on a downhill road (deceleration by regenerative torque is approximately balanced with or exceeded by acceleration by gravity). The downhill road judging means 110 may judge whether or not the vehicle is running on a downhill road on the basis of, for example, current position inclination information that is acquired as running status information. As a further alternative, the downhill road judging means 110 may make this judgment using, for example, electric power (regenerative electric power) generated by regenerative torque, instead of a regenerative torque value.

If it is judged after turning-on of the brake lamps 202 that the vehicle is running on a downhill road, the regeneration lamp control means 108 turns off the brake lamps 202 even if the calculated regenerative torque value is larger than the reference regenerative torque value. This is because of the following reasons among others. On a downhill road, it is expected that a deceleration state with regenerative torque will continue for a certain time. And the necessity to keep the brake lamps 202 on during that period is low. Furthermore, it is not necessary to keep the brake lamps 202 on if the vehicle is not being decelerated by regenerative torque.

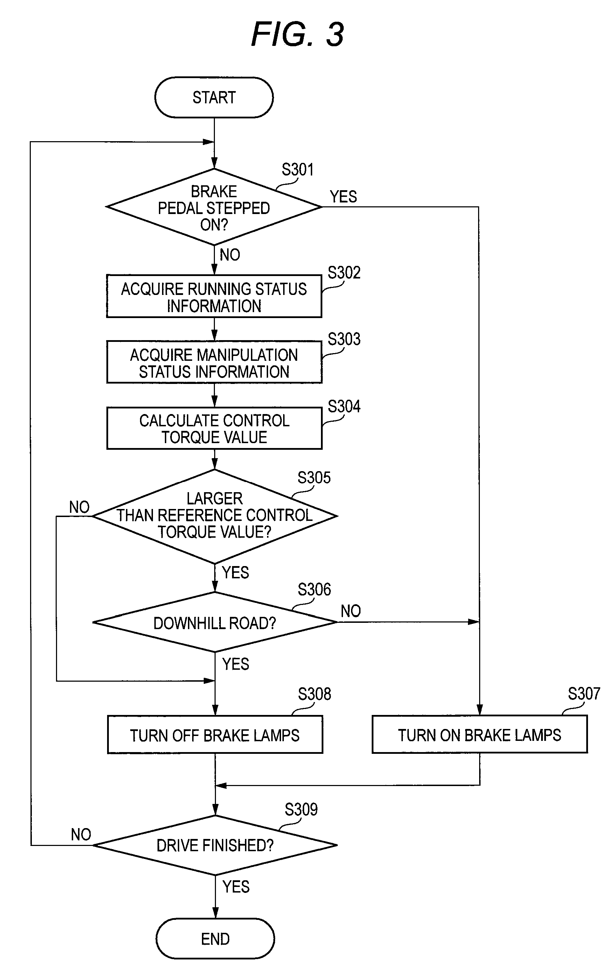

Fig. 3 is a flowchart of a process that is executed by the brake lamp control device 10. The flowchart of Fig. 3 shows a process that is executed while the vehicle incorporating the brake lamp control device 10 is running. First, the brake lamp control device 10 judges whether or not the driver has stepped on the brake pedal (step S301). If judging that the driver has stepped on the brake pedal (step S301: yes), the brake lamp control device 10 moves to step S307, where it turns on the brake lamps 202. That is, the brake lamp control device 10 turns on the brake lamps 202 ordinarily.

If judging that the driver has not stepped on the brake pedal (step S301: no), the brake lamp control device 10 causes the running status information acquiring means 102 to acquire vehicle running status information (step S302). Then the brake lamp control device 10 causes the manipulation status information acquiring means 104 to acquire vehicle manipulation status information (step S303).

Subsequently, the brake lamp control device 10 causes the control torque calculating means 106 to calculate a control torque value for the motor (step S304). Calculation of a control torque value may be performed all the time while the vehicle is running. The regeneration lamp control means 108 judges whether or not the control torque calculated at step S304 is larger than the reference regenerative torque value (step S305). If it is judged that the control torque value is not larger than the reference regenerative torque value (step S305: no), the brake lamp control device 10 moves to step S308, where it has the turn-off state of the brake lamps 202 continued (step S308).

On the other hand, if it is judged that the control torque calculated at step S304 is larger than the reference regenerative torque value (step S305: yes), then the brake lamp control device 10 causes the downhill road judging means 110 to judge whether or not the road on which the vehicle is running is a downhill road (step S306). If it is judged that the road is not a downhill road (step S306: no), the regeneration lamp control means 108 turns on the brake lamps 202 (step S307). If it is judged that the road is a downhill road (step S306: yes), the regeneration lamp control means 108 has the turn-off state of the brake lamps 202 continued (step S308).

The brake lamp control device 10 returns to step S301 to execute the following steps again until the running of the vehicle is finished (step S309: no). If it is judged that the running of the vehicle is finished (step S309: yes), the execution of the process of the flowchart is finished.

In the brake lamp control device 10, control may be performed in such a manner that the brake lamps 202 are not turned on if deceleration that is caused by a factor (e.g., cancellation of an accelerator manipulation) other than a brake pedal manipulation is lower than or equal to X m/s² and that the brake lamps 202 are necessarily turned on if it is higher than Y m/s² (Y > X) . That is, control may be performed in such a manner that the above-described control-torque-based lighting control is performed on the brake lamps 202 only if the deceleration rate is higher than X m/s² and Y m/s² (i.e., it is in a prescribed deceleration rate range).

In this case, a step of calculating a deceleration rate is added on the "no" branch of step S301 in the flowchart of Fig. 3. The brake lamps 202 are not turned on if the deceleration rate is lower than or equal to X m/s², and are turned on if it is higher than Y m/s². The process moves to step S304 if the deceleration rate is higher than X m/s² and lower than or equal to Y m/s².

As described above, in the brake lamp control device 10 according to the embodiment, a turn-on control is performed on the brake lamps 202 if a control torque value for the motor is on the regeneration side of and larger than the predetermined reference regenerative torque value. With this measure, the brake lamps 202 can be turned on quickly even in the case where deceleration due to occurrence of regenerative torque is expected but an actual deceleration rate is low, whereby the deceleration can be announced with proper timing by means of the brake lamps 202, that is, nearby vehicles can be notified of the fact that the self vehicle is decelerating.

In the brake lamp control device 10, since the reference regenerative torque can be varied based on the vehicle speed, it can be changed properly in accordance with the running status of the vehicle. Furthermore, in the brake lamp control device 10, since a regenerative torque value is calculated from a vehicle speed and a status of the accelerator pedal 208 or the brake pedal 210, a regenerative torque value can be calculated correctly on the basis of a vehicle running status and manipulation status.

In the brake lamp control device 10, where the road on which the vehicle is running is a downhill road, the brake lamps 202 are turned off or kept off even if a calculated regenerative torque value is larger than the reference regenerative torque value. This makes it possible to turn off the brake lamps 202 in the case where the necessity of announcement using the brake lamps 202 is low as exemplified by a case of running on a long downhill road in which a deceleration state continues or deceleration does not occur though regenerative torque is being produced.

Furthermore, in the brake lamp control device 10, the reference regenerative torque value is set approximately equal to a regenerative torque value corresponding to what is called engine braking. As a result, the brake lamps 202 can be turned on in the case where deceleration that is higher than would occur during engine braking may occur and hence it is necessary to notify nearby vehicles etc. of the deceleration.

### DESCRIPTION OF THE REFERENCE NUMERALS AND SIGNS

10 ··· Brake lamp control device; 102 ··· Running status information acquiring means; 104 ··· Manipulation status information acquiring means; 106 ··· Control torque calculating means; 108 ··· Lamp control means; 110 ··· Slope judging means; 202 ··· Brake lamps; 204 ··· Vehicle speed sensor; 205 ··· Shaft rotation sensors; 206 ···Acceleration sensor; 212 ···Mode switch; 214 ··· CC switch; 216 ··· ASL switch.

## Claims

1. A brake lamp control device for controlling turn-on/off of a brake lamp of a vehicle in which braking power is obtained by increase of regenerative torque produced by a motor, **characterized by** comprising:
running status information acquiring means which acquires running status information of the vehicle;
manipulation status information acquiring means which acquires manipulation status information of the vehicle;
regenerative torque calculating means which calculates a regenerative torque value of the motor based on the running status information and the manipulation status information; and
regeneration lamp control means which turns on the brake lamp if the regenerative torque value calculated by the regenerative torque calculating means is on the regeneration side of and larger than a predetermined reference regenerative torque value.

2. The brake lamp control means according to claim 1, **characterized in that**:
the running status information acquiring means comprises a vehicle speed sensor which detects a vehicle speed of the vehicle; and
the reference regenerative torque value is varied based on the vehicle speed.

3. The brake lamp control device according to claim 2, **characterized in that**:
the manipulation status information acquiring means comprises a pedal sensor which detects a status of an accelerator pedal or a brake pedal of the vehicle; and
the regenerative torque calculating means calculates the regenerative torque from the vehicle speed and the status of the accelerator pedal or the brake pedal.

4. The brake lamp control device according to any one of claims 1 to 3, **characterized in that**:
the vehicle further comprises downhill road judgingmeans which judges whether or not a road on which the vehicle runs is a downhill road; and
if it is judged that the road on which the vehicle runs is the downhill road, the regeneration lamp control means turns off the brake lamp even if the calculated regenerative torque value is on the regeneration side of and larger than the reference regenerative torque value.

5. The brake lamp control device according to any one of claims 1 to 4, **characterized in that** the reference regenerative torque value is a preset regenerative torque value that is obtained by cancellation of an accelerator manipulation on the vehicle.

6. The brake lamp control device according to claim 1 or 2, **characterized in that**:
the vehicle is of such a type that selection can be made between multiple regeneration modes; and
the regenerative torque calculatingmeans calculates the regenerative torque value of the motor based on the vehicle speed of the vehicle and a selected regeneration mode.
